Europäisches Patentamt

European Patent Office

Office européen des brevets

(19)

(11) Numéro de publication : **0 038 233**
**B1**

(12)

# FASCICULE DE BREVET EUROPÉEN

(45) Date de publication du fascicule du brevet :
16.11.83

(51) Int. Cl.³ : **F 16 H   7/12**

(21) Numéro de dépôt : **81400462.8**

(22) Date de dépôt : **24.03.81**

(54) **Tendeur de courroie de transmission crantée.**

(30) Priorité : **11.04.80 FR 8008204**

(43) Date de publication de la demande :
**21.10.81 Bulletin 81/42**

(45) Mention de la délivrance du brevet :
**16.11.83 Bulletin 83/46**

(84) Etats contractants désignés :
**AT BE DE GB IT NL SE**

(56) Documents cités :
**DE A 2 535 676**
**FR A 2 182 369**
**FR A 2 320 470**

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Lalevee, Jean-Claude**
**28, rue des Pavillons**
**F-95110 Sannois (FR)**
Inventeur : **Picout, René**
**3 bis, Grande-Rue**
**F-78290 Croissy (FR)**

(74) Mandataire : **Colas, Jean-Pierre et al**
**8 et 10 Avenue Emile Zola**
**F-92109 Boulogne-Billancourt (FR)**

EP 0 038 233 B1

Jouve, 18, rue St-Denis, 75001 Paris, France

Tendeur de courroie de transmission crantée

L'invention se rapporte à un tendeur de courroie de transmission crantée.

Une transmission par courroie crantée en prise avec une poulie motrice crantée et au moins une poulie réceptrice crantée est soumise à des impulsions qui prennent naissance au contact du haut de dent de la poulie motrice avec le creux de dent de la courroie et qui se propagent dans la courroie sous forme d'ondes incidentes et réfléchies qui interfèrent.

Il en résulte une onde stationnaire émettrice de bruits qui se forment à certaines vitesses de défilement de la courroie et surtout pour certaines tensions de cette courroie.

Si dans les applications d'une telle transmission à régime constant, on peut chercher à se placer hors des conditions de bruyance, il en va différemment dans les applications à régimes d'entraînement variables, comme c'est notamment le cas des courroies de distribution de moteur à combustion interne.

On a trouvé qu'il est possible d'améliorer dans ces cas de régimes d'entraînement variables le silence de fonctionnement avec une tension de courroie relativement faible, à la condition de résoudre le problème de dilatation des composants de la transmission qui interfère avec celui de la tension de courroie, de sorte qu'à froid le fonctionnement silencieux à tension faible s'accompagne d'un risque de saut de dent d'entraînement tandis qu'à chaud le fonctionnement à tension plus élevée élimine le risque de saut de dent mais devient plus bruyant.

Le document DE-A-2 535 676 apporte une solution à ce problème. Il décrit un tendeur de courroie pourvu d'un système thermosensible agissant à l'encontre d'éléments élastiques sollicitant un galet contre une courroie par l'intermédiaire d'un levier et d'un support entre lesquels sont interposés ces éléments élastiques.

La présente invention apporte une autre solution à ce problème par un dispositif de plus grande compacité sous forme d'un tendeur de courroie de transmission crantée comportant un galet d'appui sur la courroie, monté sur un support mobile, des moyens élastiques coopérant avec le support mobile pour solliciter le galet en contact avec la courroie et des moyens dilatables sensibles à la température coopérant avec le support en opposition à l'action de ces moyens élastiques. Suivant une première particularité de l'invention, ce tendeur de courroie présente un support mobile constitué par un basculeur excentrique intérieur à ce galet, articulé autour d'un axe excentré par rapport au centre du galet, et ayant des surfaces d'extrémité en regard respectivement soumises à ces moyens élastiques et ces moyens dilatables qui s'appuient sur un support fixe excentré pour ce basculeur.

Suivant une deuxième particularité de l'invention, ces moyens dilatables sont montés sur le bloc moteur d'un moteur à combustion interne ou sur un organe lié à ce bloc moteur en température.

Une forme de réalisation d'un tendeur de courroie crantée selon l'invention est d'ailleurs ci-après décrite, à titre d'exemple, et en référence au dessin annexé, dans lequel :

la figure 1 est une vue schématique d'un tendeur de courroie à composants internes au galet,

la figure 2 est une vue suivant II-II de la figure 1.

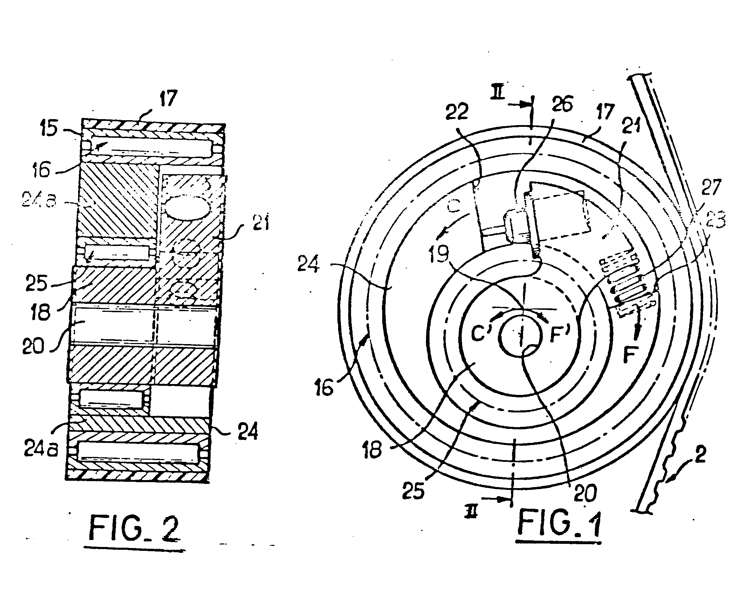

On a représenté aux figures 1 et 2 un mode de réalisation dont l'intérêt principal réside dans son faible encombrement, l'ensemble du tendeur étant intérieur au galet.

Le galet est en effet constitué par la bague externe 15 d'un roulement à rouleaux 16, dont la périphérie est pourvue d'une bande de roulement 17 destinée à coopérer avec un brin mou 2 de courroie crantée. La partie fixe du tendeur est constituée par un moyeu 18 excentré par rapport à l'axe 19 du galet et traversé par un trou axial 20 permettant sa fixation par vis sur le bloc moteur, de manière non représentée.

Le moyeu 18 comporte sur une partie de sa longueur un bras radial 21 intérieur au roulement à rouleaux 16, et qui s'étend dans l'intervalle de deux surfaces en regard 22, 23 faisant partie d'un basculeur excentrique 24 formé latéralement à une bague 24a interposée entre le roulement à rouleaux 16 et un roulement à rouleaux 25 entourant la partie cylindrique du moyeu 18.

Dans l'intervalle du bras radial 21 et des surfaces 22, 23 du basculeur 24 sont disposés, d'une part une capsule de dilatation 26 logée dans le bras 21 et dont la tige poussoir coopère avec la surface 22, et d'autre part, un ressort de compression 27 en partie logé dans le bras 21 et à l'intérieur de la surface 23 dans le basculateur 24.

On voit que dans ce cas, un échauffement du moteur entraînant la dilatation de la capsule 26 aura pour effet que sa tige poussoir fera tourner le basculeur excentrique 24 dans le sens de la flèche C, ainsi donc que la bague interne du roulement à rouleaux 16, de sorte que l'axe 19 du galet et donc de la bande de roulement 17 va se déplacer dans le sens de la flèche C' qui correspond à un retrait du galet par rapport au brin mou 2 de la courroie, tandis que le ressort 27 sera un peu plus comprimé.

Lorsque le moteur sera au contraire amené à se refroidir, la capsule 26 va se rétracter et le ressort 27 va pousser le basculeur 24 dans le sens de la flèche F, tendant à maintenir la surface 22 du basculeur au contact de la tige poussoir de la capsule 26, de sorte que l'axe 19 du galet va se déplacer dans le sens de la flèche F' qui correspondant à une poussée accentuée du galet sur le brin mou 2 et donc à un renforcement de la tension de ce dernier.

Le retrait maximal du tendeur peut être limité à l'aide d'une butée réglable disposée entre la face 23 et le bras radial 21.

Bien entendu l'invention est également applicable au cas de courroies crantées sur leurs deux faces, le galet pouvant alors être lui-même une roue dentée.

D'autres variantes pourront également être imaginées du point de vue réalisation sans pour autant sortir du domaine de l'invention.

## Revendications

1. Tendeur de courroie de transmission comportant un galet (15-17) d'appui sur la courroie monté sur un support mobile (24), des moyens élastiques (27) coopérant avec le support mobile (24) pour solliciter le galet en contact avec la courroie et des moyens dilatables (26) sensibles à la température coopérant avec ledit support (24) en opposition à l'action desdits moyens élastiques (27), caractérisé en ce que ledit support mobile (24) est constitué par un basculeur excentrique, intérieur audit galet (15-17), articulé autour d'un axe (20) excentré par rapport au centre (19) du galet (15-17), et ayant des surfaces d'extrémité en regard (22-23) respectivement soumises auxdits moyens élastiques (27) et auxdits moyens dilatables (26) qui s'appuient sur un support fixe (18-21) intermédiaire formant axe fixe excentré (20) pour ledit basculeur.

2. Tendeur de courroie selon la revendication 1, pour moteur à combustion interne, caractérisé en ce que les moyens dilatables (26) sont montés sur le bloc moteur ou un organe lié à celui-ci en température.

## Claims

1. Tensioning device for a belt comprising a pressure roller (15-17) bearing on the belt and mounted on a mobile support (24), elastic means (27) cooperating with the mobile support (24) to urge the roller into contact with the belt and temperature sensitive expandable means (20) cooperating with said support (24) in opposition to the action of the said elastic means (27), characterized in that said mobile support (24) is constituted by an eccentric rocker mounted inside said roller (15-17) on an axis (20) eccentric with respect to the centre (19) of the roller (15-17), and having opposed end surfaces (22-23) respectively subjected to said elastic means (27) and to said expandable means (26) that bear on a fixed intermediary support (18-21) forming an eccentric fixed axis (20) for said rocker.

2. Driving belt tensioning device according to claim 1, for us in an internal combustion engine, characterized in that expandable means (26) are mounted on the engine block or on an organ thermally connected thereto.

## Ansprüche

1. Spannvorrichtung für Zahnriemen, die eine auf dem Riemen aufliegende, auf einem beweglichen Halter (24) angeordnete Druckrolle (15-17) aufweist, sowie elastische Mittel (27), die mit dem beweglichen Halter (24) zusammenwirken, um die Rolle mit dem Riemen in Berührung zu halten, ferner dehnbare, wärmeempfindliche Teile (20), die mit dem Halter (24) entgegengesetzt der Wirkung der elastischen Mittel (27) zusammenwirken, dadurch gekennzeichnet, dass der bewegliche Halter (24) durch einen exzentrischen, im Inneren der Rolle (15-17) befindlichen Kipper gebildet ist, der auf einer im Bezug auf den Mittelpunkt der Rolle (15-17) exzentrisch angeordneten Achse (20) gelagert ist und der sich gegenüberliegende Endflächen (22-23) besitzt, auf die einerseits die elastischen Mittel (27) und andererseits die dehnbaren Mittel (26) einwirken, die sich auf einen feststehenden Zwischenhalter (18-20) stützen, welcher für den Kipper eine feststehende exzentrische liegende Achse bildet.

2. Spannvorrichtung für Riemen nach Anspruch 1 für einen Verbrennungsmotor, dadurch gekennzeichnet, dass die dehnbaren Mittel (26) auf dem Motorblock oder ein mit diesem thermisch verbundenen Teil angeordnet sind.

FIG. 2

FIG. 1